# EUROPÄISCHE PATENTSCHRIFT

(11) **EP 3 699 405 B1**
(45) Veröffentlichungstag und Bekanntmachung des Hinweises auf die Patenterteilung: **06.07.2022**
(21) Anmeldenummer: 20162402.0
(22) Anmeldetag: 02.02.2018
(51) Int. Cl.: F01D 25/16, F02C 6/12, F01D 25/18

(54) **LAGERGEHÄUSE UND EIN ABGASTURBOLADER MIT EINEM SOLCHEN GEHÄUSE**
BEARING HOUSING AND A TURBO CHARGER WITH SUCH A HOUSING
BOÎTIER DE PALIER ET TURBOCOMPRESSEUR À GAZ D'ÉCHAPPEMENT DOTÉ D'UN TEL BOÎTIER DE PALIER

(30) Priorität: 20.02.2017 DE 102017202687
(43) Veröffentlichungstag der Anmeldung: 26.08.2020
(62) Teilanmeldung aus: 18154911.4
(73) Patentinhaber: BMTS Technology GmbH & Co. KG, 70376 Stuttgart (DE)
(72) Erfinder: HASLINGER, Fabian, 68199 Mannheim (DE); HENZLER, Simon, 72636 Frickenhausen (DE); KLEINSCHMIDT, Ruediger, 74354 Besigheim (DE); KUHNE, Oliver, 70374 Stuttgart (DE); SCHMITT, Steffen, 71254 Ditzingen (DE); STETTER, Frieder, 70597 Stuttgart (DE)
(74) Vertreter: Herrmann, Jochen

(56) Entgegenhaltungen:
- EP-A2- 2 333 249
- EP-B1- 2 192 272
- WO-A1-2016/153963
- JP-A- H07 217 441

## Beschreibung

Die Erfindung betrifft ein Lagergehäuse mit einem Lagergehäusedeckel und einen Abgasturbolader mit einem solchen Lagergehäuse.

In einem Abgasturbolader verbindet das Lagergehäuse ein Verdichtergehäuse zum Verdichten der zu Brennkammern der Brennzylinder strömenden Luft mit einem Turbinengehäuse zum Antreiben einer Welle mittels einer Abgasströmung. Das Lagergehäuse, das Verdichtergehäuse und das Turbinengehäuse sind durch die Welle miteinander verbunden. Das Turbinengehäuse und das Verdichtergehäuse sind mit einem Teilchenstrom belastet und müssen von dem schmierölaufnehmenden Lagergehäuse öldicht getrennt werden.

Durch den Lagergehäusedeckel wird das Lagergehäuse von dem Verdichtergehäuse getrennt. Damit die Welle das Lagergehäuse mit dem Verdichtergehäuse verbinden kann, weist der Lagergehäusedeckel eine rotationssymmetrische Dichtungsausnehmung mit einer Mittelachse auf. In der Dichtungsausnehmung ist zumindest bereichsweise eine Dichtungsbuchse angeordnet, die eine Wellenausnehmung für die Welle aufweist und diese zu dem Verdichtergehäuse abdichtet. Die Dichtungsbuchse ist an einer Auflagefläche des Lagergehäusedeckels mit einer Anschlagfläche angeordnet und wird dadurch in Richtung des Verdichtergehäuses axial festgelegt. Auf der Auflagefläche des Lagergehäusedeckels ist des Weiteren eine von der Mittelachse beabstandete umlaufende Nut angeordnet.

Bei hohen Drehzahlen herrscht in dem Verdichtergehäuse im Vergleich zu dem Lagergehäuse ein Überdruck, so dass das Schmieröl aus dem Lagergehäuse nicht in das Verdichtergehäuse entweichen kann. Fällt jedoch die Drehzahl und damit der Druck in dem Verdichtergehäuse, so kann das Schmieröl in das Verdichtergehäuse, insbesondere zwischen der Auflagefläche des Lagergehäuses und der Anschlagfläche der Dichtungsbuchse, entweichen.

Aus dem Stand der Technik sind einige Lösungen für eine öldichte Abtrennung des Lagergehäuses von dem Verdichtergehäuse bereits bekannt. So beschreiben beispielsweise die Druckschriften JP H07-217 441 A, WO 2016/153963 A1 und US 4,664,605 A zusätzliche Dichtungsscheiben, durch die das Schmieröl bereits vor dem Lagergehäusedeckel aufgefangen und in einen Innenraum des Lagergehäuses zurückgeleitet wird. Gelangt jedoch das Schmieröl zwischen die Dichtungsscheibe und den Lagergehäusedeckel, so kann das Schmieröl nicht mehr aufgefangen werden.

Die Druckschrift EP 2 192 272 B1 beschreibt eine weitere Lösung zu dem oben beschriebenen Problem. Hier wird auf dem Lagergehäusedeckel eine Nut geformt, die bereichsweise nach unten offen ist. In diesem Bereich kann das in der Nut gesammelte Schmieröl nach unten ablaufen. Aus der Druckschrift EP 2 333 249 A2 ist zudem eine Ringnut auf dem Lagergehäusedeckel zum Sammeln von Schmieröl bekannt.

Die Aufgabe der vorliegenden Erfindung ist es, ein Lagergehäuse der oben genannten Gattung derart zu verbessern, dass insbesondere die Abdichtung in einem Dichtungsbereich zwischen der Auflagefläche des Lagergehäuses und der Anschlagfläche der Dichtungsbuchse verbessert wird.

Diese Aufgabe wird erfindungsgemäß durch den Gegenstand der unabhängigen Ansprüche gelöst. Vorteilhafte Ausführungsformen sind Gegenstand der abhängigen Ansprüche.

Bei einer nicht erfindungsgemäßen Lösung kann vorgesehen sein, dass eine Nut einen unterhalb einer Mittelachse angeordneten, von der Mittelachse radial nach außen ausgedehnten Ablaufbereich aufweist. Die Nut kann beispielsweise eiförmig sein oder in dem ausgedehnten Ablaufbereich spitz nach unten zulaufen. Der ausgedehnte Ablaufbereich kann vorteilhaft eine Ringströmung in der Nut reduzieren und das Schmieröl kann durch den Ablaufbereich aus der Nut unter Einwirkung der Schwerkraft ablaufen. Somit wird die Menge des Schmieröls in der Nut und folglich auf der Auflagefläche des Lagergehäuses reduziert und der Dichtungsbereich zwischen dem Lagergehäusedeckel und der Dichtungsbuchse besser abgedichtet.

Bei einer vorteilhaften Weiterbildung der nicht erfindungsgemäßen Lösung ist vorgesehen, dass die Nut wenigstens einen radial nach außen gerichteten, unter der Mittelachse angeordneten Abströmungskanal aufweist. Der Abströmungskanal verbindet die Nut und die Auflagefläche des Lagergehäusedeckels unterhalb der Mittelachse, so dass das Schmieröl aus der Nut schneller ablaufen kann. Der Abströmungskanal kann eine an die Strömung des Schmieröls in der Nut angepasste Form aufweisen. So kann der Abströmungskanal in seiner Längsrichtung eine abweichende Breite, eine abweichende Tiefe oder einen abweichenden Querschnitt aufweisen. Durch die Geometrie des Abströmungskanals können die Ablaufgeschwindigkeit sowie die Ablaufmenge des Schmieröls optimiert werden.

Vorteilhafterweise ist bei der nicht erfindungsgemäßen Lösung vorgesehen, dass der Lagergehäusedeckel wenigstens eine unterhalb der Mittelachse angeordnete an einer äußeren Seitenwand der Nut anliegende Ablaufausnehmung aufweist. Die Ablaufausnehmung kann eine im Vergleich zu der Nut kleinere Tiefe aufweisen, so dass das in der Nut angesammelte Schmieröl unter der Schwerkraft in die Ablaufausnehmung und anschließend auf die Auflagefläche des Lagergehäusedeckels ablaufen kann. Die Ablaufausnehmung ist nicht umlaufend um die Mittelachse angeordnet, so dass keine Ringströmung in der Ablaufausnehmung möglich ist und dadurch eine größere Menge des Schmieröls ablaufen kann.

Der Lagergehäusedeckel kann auch mehrere aneinander anliegende Ablaufausnehmungen aufweisen, wobei die Ablaufausnehmungen eine voneinander abweichende Tiefe, Breite und Länge aufweisen können. Die Tiefe, die Breite sowie die Länge der Ablaufausnehmungen können sich schrittweise verändern, so dass durch die Ablaufausnehmungen eine stufenartige Ablaufstruktur ausgeformt wird. Eine derartige stufenartige Ablaufstruktur kann die Ringströmung in der Nut verhindern, so dass das Ablaufen des Schmieröls aus der Nut verbessert und der Dichtungsbereich zwischen der Auflagefläche und der Anschlagfläche abgedichtet werden können.

Vorteilhafterweise ist bei einer Weiterbildung der nicht erfindungsgemäßen Lösung vorgesehen, dass ein Schnittwinkel zwischen der äußeren Seitenwand der Nut und/oder einer inneren Seitenwand der Nut und der Mittelachse von Null abweicht. Das Schmieröl in der Nut wird dadurch von der Mittelachse und somit von dem Dichtungsbereich abgeleitet, so dass die Menge des Schmieröls in der Nut reduziert wird.

Die zu der Mittelachse geneigte innere Seitenwand der Nut vermindert ein Ablaufen des Schmieröls zu dem Dichtungsbereich und verbessert somit die Abdichtung zwischen der Auflagefläche und der Anschlagfläche. Durch die zu der Mittelachse geneigte äußere Seitenwand der Nut wird das in der Nut angesammelte Öl abgeleitet. Vorteilhafterweise wird bei einer derartig ausgestalteten äußeren Seitenwand das Ablaufen des Schmieröls auch durch die Ringströmung des Schmieröls in der Nut unterstütz.

Sowohl der Schnittwinkel zwischen der Mittelachse und der inneren Seitenwand als auch der Schnittwinkel zwischen der Mittelachse und der äußeren Seitenwand können an das Strömungsverhalten des Schmieröls angepasst werden und sich voneinander unterscheiden.

Vorteilhafterweise ist bei der nicht erfindungsgemäßen Lösung vorgesehen, dass eine Dichtkontur auf der Auflagefläche und eine Gegendichtkontur auf der Anschlagfläche vorgesehen sind, die insbesondere ineinander eingreifen, wobei die Dichtkontur und die Gegendichtkontur rotationssymmetrisch und beide zu der Mittelachse beabstandet angeordnet sind. Vorteilhafterweise können beispielsweise die Dichtkontur eine Ausnehmung und die Gegendichtkontur eine insbesondere komplementär dazu ausgebildete Feder sein. Die Konturen verhindern zusätzlich ein Ablaufen des Schmieröls in den Dichtungsbereich zwischen der Anschlagfläche und der Auflagefläche und verbessern die Abdichtung in dem Dichtungsbereich.

Bei einer erfindungsgemäßen Lösung ist vorgesehen, dass die Nut einen unterhalb der Mittelachse angeordneten Trennsteg aufweist, der die Nut unterbricht. Der Trennsteg verhindert die Ringströmung des Schmieröls in der Nut, so dass das Schmieröl aus der Nut ablaufen kann. Die Form des Trennstegs kann an das Strömungsverhalten des Schmieröls in der Nut angepasst sein. So kann der Trennsteg beispielsweise nach unten zugespitzt ausgeformt sein, um ein Ablaufen des Schmieröls unter der Einwirkung der Schwerkraft zu unterstützen.

Vorteilhafterweise ist bei einer Weiterbildung der erfindungsgemäßen Lösung vorgesehen, dass die Nut wenigstens einen radial nach außen gerichteten, unter der Mittelachse angeordneten Abströmungskanal aufweist, durch den das in der Nut angesammelte Schmieröl ablaufen kann. So kann durch den Trennsteg die Ringströmung des Schmieröls in der Nut unterbrochen werden und das an dem Trennsteg angesammelte Schmieröl durch den Abströmungskanal aus der Nut abgeleitet werden. Der Abströmungskanal kann dabei beispielsweise seitlich an dem Trennsteg angeordnet sein. Alternativ können auch zwei Abströmungskanäle jeweils seitlich an dem Trennsteg angeordnet sein.

Der Abströmungskanal kann eine an das Strömungsverhalten des Schmieröls in der Nut angepasste Form aufweisen. So kann der Abströmungskanal in seiner Längsrichtung eine abweichende Breite, eine abweichende Tiefe oder einen abweichenden Querschnitt aufweisen. Durch die Geometrie des Abströmungskanals können die Ablaufgeschwindigkeit sowie die Ablaufmenge des Schmieröls optimiert werden.

Vorteilhafterweise ist bei der erfindungsgemäßen Lösung vorgesehen, dass der Lagergehäusedeckel wenigstens eine unterhalb der Mittelachse angeordnete an einer äußeren Seitenwand der Nut anliegende Ablaufausnehmung aufweist. Die Ablaufausnehmung kann eine im Vergleich zu der Nut kleinere Tiefe aufweisen, so dass das in der Nut angesammelte Schmieröl unter der Schwerkraft in die Ablaufausnehmung und anschließend auf die Auflagefläche des Lagergehäusedeckels ablaufen kann. Der Lagergehäusedeckel kann auch mehrere aneinander anliegende Ablaufausnehmungen aufweisen, wobei die Ablaufausnehmungen eine voneinander abweichende Tiefe, Breite und Länge aufweisen können. Der Trennsteg kann dabei in die Ablaufausnehmungen hineinragen, so dass auch in der jeweiligen Ablaufausnehmung die Ringströmung des Schmieröls unterbrochen wird.

Bei einer vorteilhaften Weiterbildung der erfindungsgemäßen Lösung ist vorgesehen, dass ein Schnittwinkel zwischen der äußeren Seitenwand der Nut und/oder einer inneren Seitenwand der Nut und der Mittelachse von Null abweicht. Das Schmieröl in der Nut kann so von der Mittelachse abgeleitet werden, so dass der Dichtungsbereich besser abgedichtet werden kann. Der Schnittwinkel zwischen der Mittelachse und der inneren Seitenwand kann sich von dem Schnittwinkel zwischen der Mittelachse und der äußeren Seitenwand unterscheiden, um das Strömungsverhalten des Schmieröls in der Nut optimieren zu können.

Vorteilhafterweise ist vorgesehen, dass eine Dichtkontur auf der Auflagefläche und eine Gegendichtkontur auf der Anschlagfläche vorgesehen sind, wobei die Dichtkontur und die Gegendichtkontur beide rotationssymmetrisch und beide zu der Mittelachse beabstandet angeordnet sind. Beispielsweise können die Dichtkontur eine Ausnehmung und die Gegendichtkontur eine insbesondere komplementär darin eingreifende Feder sein.

Die Erfindung betrifft auch einen Abgasturbolader mit einem Lagergehäuse nach der vorangegangenen Beschreibung zu der erfindungsgemäßen Lösung.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: eine Schnittansicht eines erfindungsgemäßen Lagergehäuses mit einem Lagergehäusedeckel und mit einer Dichtungsbuchse;
- Fig. 2: eine Schnittansicht eines erfindungsgemäßen Lagergehäuses, wobei ein Lagergehäusedeckel und eine Dichtungsbuchse sich hintergreifen;
- Fig. 3: eine Ansicht eines Lagergehäusedeckels eines erfindungsgemäßen Lagergehäuses mit einer Nut, die durch einen Trennsteg unterbrochen ist;
- Fig. 4: eine Ansicht eines Lagergehäusedeckels eines erfindungsgemäßen Lagergehäuses mit einem Trennsteg und mit Abströmungskanälen;
- Fig. 5: eine Ansicht eines Lagergehäusedeckels eines erfindungsgemäßen Lagergehäuses mit einem Trennsteg und mit einer Ablaufausnehmung;
- Fig. 6: eine Ansicht eines Lagergehäusedeckels eines nicht erfindungsgemäßen Lagergehäuses mit einer Nut, die einen Ablaufbereich aufweist.

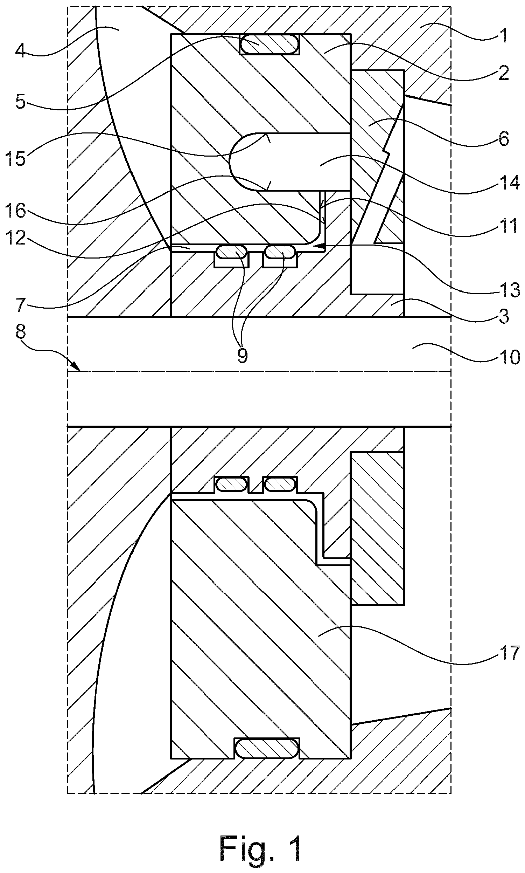

Fig. 1 zeigt eine Schnittansicht eines erfindungsgemäßen Lagergehäuses 1 mit einem Lagergehäusedeckel 2 und mit einer Dichtungsbuchse 3. Durch den Lagergehäusedeckel 2 wird das Lagergehäuse 1 von einem Verdichter 4 getrennt. Zwischen dem Lagergehäusedeckel 2 und dem Lagergehäuse 1 sind eine Ringdichtung 5 sowie eine Axiallagerscheibe 6 angeordnet, die beidseitig jeweils eine Anlauffläche sowie eine Positionierungsausnehmung für eine Welle aufweist.

Durch eine rotationssymmetrische Dichtungsausnehmung 7 mit einer Mittelachse 8 kann die Welle das Lagergehäuse 1 mit dem Verdichter 4 verbinden. In der Dichtungsausnehmung 7 ist die Dichtungsbuchse 3 bereichsweise angeordnet und ist zu dem Lagergehäusedeckel 2 durch Ringdichtungen 9 abgedichtet. Die Dichtungsbuchse 3 weist eine Wellenausnehmung 10 für die Welle auf und dichtet das Lagergehäuse 1 zu dem Verdichter 4 ab.

Die Dichtungsbuchse 3 ist mit einer Anschlagfläche 12 gegenüberliegend zu einer Auflagefläche 11 des Lagergehäusedeckels 2 angeordnet. Zwischen der Auflagefläche 11 und der Anschlagfläche 12 befinden sich ein Ringspalt und ein Dichtungsbereich 13, durch den insbesondere bei kleinen Drehzahlen das Schmieröl in den Verdichter 4 gelangen kann.

Auf der Auflagefläche 11 des Lagergehäusedeckels 2 - was hier als "in die Auflagefläche 11 hineinragend" und als "in der Auflagefläche 11 ausgebildet" zu verstehen ist - ist des Weiteren eine zur Mittelachse 8 beabstandet umlaufende Nut 14 angeordnet. Die Nut 14 weist eine äußere Seitenwand 15 und eine innere Seitenwand 16 auf, wobei ein Schnittwinkel der äußeren Seitenwand 15 zu der Mittelachse 8 und ein Schnittwinkel der inneren Seitenwand 16 zu der Mittelachse 8 in diesem Ausführungsbeispiel gleich Null, das heißt die Wände 15, 16 parallel zur Mittelachse 8, sind.

Unterhalb der Mittelachse 8 weist die Nut 14 einen Trennsteg 17 auf, der die Nut 14 unterbricht. Durch den Trennsteg 17 kann eine Ringströmung des Schmieröls in der Nut 14 unterbrochen werden und das Schmieröl kann seitlich an dem Trennsteg 17 aus der Nut 14 ablaufen.

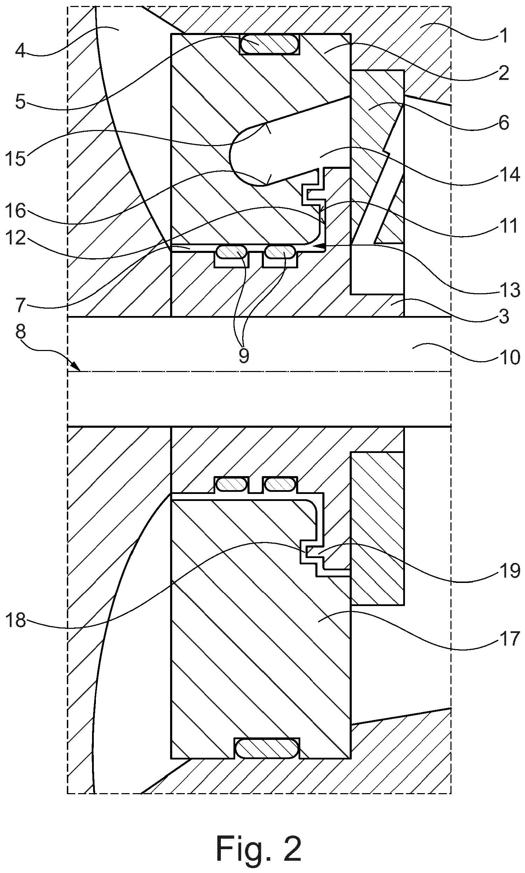

Fig. 2 zeigt eine Schnittansicht des erfindungsgemäßen Lagergehäuses 1, wobei der Lagergehäusedeckel 2 und die Dichtungsbuchse 3 sich hintergreifen. Der Lagergehäusedeckel 2 weist auf der Auflagefläche 11 eine Dichtkontur in Form einer Ausnehmung 18 und die Dichtungsbuchse 3 auf der Anschlagfläche 12 eine Gegendichtkontur in Form einer Feder 19 auf. Sowohl die Ausnehmung 18 als auch die Feder 19 sind rotationssymmetrisch zu der Mittelachse 8, so dass eine Rotation der Dichtungsbuchse 3 mit der Welle möglich wird.

In diesem Ausführungsbeispiel ist der Schnittwinkel der äußeren Seitenwand 15 der Nut 14 und der inneren Seitenwand 16 der Nut 14 zu der Mittelachse 8 ungleich Null. Das Schmieröl in der Nut 14 wird an der äußeren Seitenwand 15 und an der inneren Seitenwand 16 von dem Dichtungsbereich 13 abgeleitet, so dass die Menge des Schmieröls in dem Dichtungsbereich 13 reduziert wird und dadurch der Dichtungsbereich 13 besser abgedichtet wird.

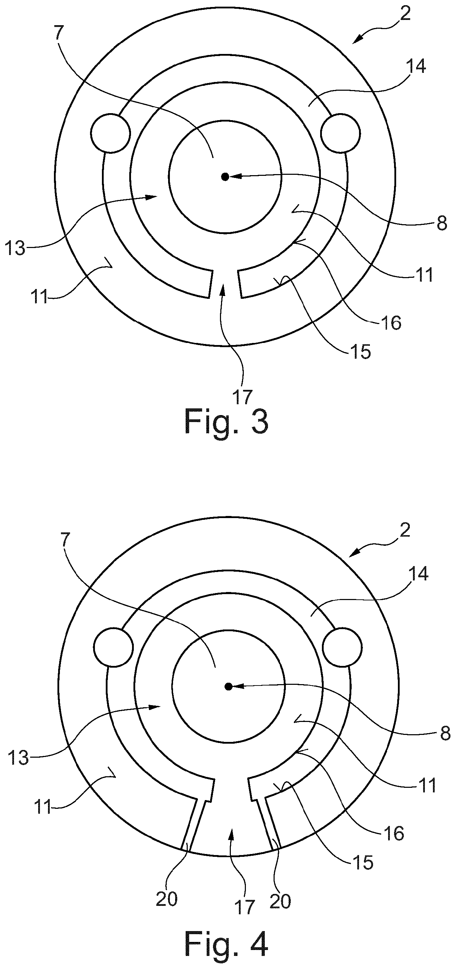

Fig. 3 zeigt eine Ansicht des Lagergehäusedeckels 2 für das erfindungsgemäße Lagegehäuse 1 mit der Nut 14. In der Nut 14 ist der Trennsteg 17 angeordnet, der die Nut 14 unterhalb der Mittelachse 8 unterbricht. Durch den Trennsteg 17 wird eine Ringströmung des Schmieröls in der Nut 14 unterbrochen und das Schmieröl kann aus der Nut 14 seitlich an dem Trennsteg 17 ablaufen.

In Fig. 4 ist eine Ansicht des Lagergehäusedeckels 2 für das erfindungsgemäße Lagegehäuse 1 mit dem Trennsteg 17 und mit Abströmungskanälen 20 gezeigt. Die Abströmungskanäle 20 sind radial nach außen gerichtet und unter der Mittelachse 8 angeordnet. Die Abströmungskanäle 20 verbinden die Nut 14 und die Auflagefläche 11 des Lagergehäusedeckels 2, so dass das Schmieröl aus der Nut 14 schneller ablaufen kann.

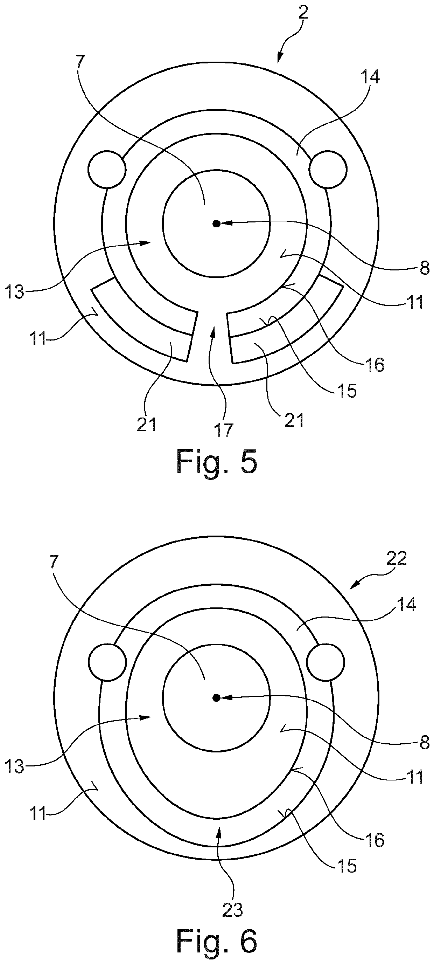

Fig. 5 zeigt eine Ansicht des Lagergehäusedeckels 2 für das erfindungsgemäße Lagegehäuse 1 mit dem Trennsteg 17 und mit einer Ablaufausnehmung 21. Die Ablaufausnehmung 21 ist unterhalb der Mittelachse 8 angeordnet und liegt an der äußeren Seitenwand 15 der Nut 14 an. Die Ablaufausnehmung 21 weist eine kleinere Tiefe als die Nut 14 auf, so dass das in der Nut 14 angesammelte Schmieröl unter der Schwerkraft in die Ablaufausnehmung 21 und anschließend auf die Auflagefläche 11 des Lagergehäusedeckels 2 ablaufen kann. Die Ablaufausnehmung 21 ist um die Mittelachse 8 nicht umlaufend angeordnet, so dass keine Ringströmung in der Ablaufausnehmung 21 unterstützt wird und dadurch eine größere Menge des Schmieröls ablaufen kann.

Fig. 6 zeigt eine Ansicht eines alternativ ausgestalteten Lagergehäusedeckels 22 für das nicht erfindungsgemäße Lagegehäuse 1 mit der Nut 14, die einen Ablaufbereich 23 aufweist. Der Ablaufbereich 23 ist unterhalb der Mittelachse 8 anordnet und ist von der Mittelachse 8 radial nach außen ausgedehnt. Der ausgedehnte Ablaufbereich 23 kann vorteilhaft eine Ringströmung in der Nut 14 reduzieren und das Schmieröl kann aus der Nut 14 unter Einwirkung der Schwerkraft ablaufen. Die Menge des Schmieröls in der Nut 14 und folglich auf der Auflagefläche 11 können somit reduziert werden und der Dichtungsbereich 13 zwischen dem Lagergehäusedeckel 22 und der Dichtungsbuchse 3 kann besser abgedichtet werden.

## Patentansprüche

1. Lagergehäuse (1) mit einem Lagergehäusedeckel (2) für einen Abgasturbolader,
- wobei der Lagergehäusedeckel (2) an dem Lagergehäuse (1) angeordnet ist,
- wobei der Lagergehäusedeckel (2) eine durchdringende rotationssymmetrische Dichtungsausnehmung (7) mit einer Mittelachse (8) aufweist,
- wobei in der Dichtungsausnehmung (7) eine Dichtungsbuchse (3) zumindest bereichsweise angeordnet ist,
- wobei die Dichtungsbuchse (3) eine durchdringende zu der Mittelachse (8) rotationssymmetrische Wellenausnehmung (10) für eine Welle aufweist,
- wobei der Lagergehäusedeckel (2) eine dem Lagergehäuse (1) zugewandte sich von der Mittelachse (8) radial erstreckende Auflagefläche (11) aufweist, die einer Anschlagfläche (12) der Dichtungsbuchse (3) gegenüberliegt,
- wobei der Lagergehäusedeckel (2) in der Auflagefläche (11) eine zur Mittelachse (8) radial beabstandete Nut (14) aufweist
**dadurch gekennzeichnet,**
**dass** die Nut (14) umlaufend ist und einen unterhalb der Mittelachse (8) angeordneten Trennsteg (17) aufweist, der die Nut (14) unterbricht und die Ringströmung des Schmieröls in der Nut (14) verhindert.

2. Lagergehäuse nach Anspruch 1,
**dadurch gekennzeichnet,**
**dass** die Nut (14) wenigstens einen radial nach außen gerichteten, unter der Mittelachse (8) angeordneten Abströmungskanal (20) aufweist, durch den das in der Nut (14) angesammelte Schmieröl ablaufen kann.

3. Lagergehäuse nach Anspruch 1 oder 2,
**dadurch gekennzeichnet,**
**dass** der Lagergehäusedeckel (2) wenigstens eine unterhalb der Mittelachse (8) angeordnete an einer äußeren Seitenwand (15) der Nut (14) anliegende Ablaufausnehmung (21) aufweist.

4. Lagergehäuse nach einem der Ansprüche 1 bis 3,
**dadurch gekennzeichnet,**
**dass** ein Schnittwinkel zwischen der äußeren Seitenwand (15) der Nut (14) und/oder einer inneren Seitenwand (16) der Nut (14) und der Mittelachse (8) von Null abweicht.

5. Lagergehäuse nach einem der Ansprüche 1 bis 4,
**dadurch gekennzeichnet,**
**dass** auf der Auflagefläche (11) eine Dichtkontur und auf der Anschlagfläche (12) eine Gegendichtkontur angeordnet sind, die beide rotationssymmetrisch und zur Mittelachse (8) beabstandet angeordnet sind.

6. Lagergehäuse nach Anspruch 5,
**dadurch gekennzeichnet,**
**dass** die Dichtkontur eine Ausnehmung (18) und die Gegendichtkontur eine insbesondere komplementär dazu ausgebildete Feder (19) sind.

7. Abgasturbolader mit einem Lagergehäuse (1) nach einem der vorhergehenden Ansprüche.

## Claims

1. Bearing housing (1) with a bearing housing cover (2) for an exhaust gas turbocharger,
- wherein the bearing housing cover (2) is arranged on the bearing housing (1),
- wherein the bearing housing cover (2) has a penetrating rotationally symmetrical sealing recess (7) with a central axis (8),
- wherein a sealing bushing (3) is arranged in the sealing recess (7) at least in regions,
- wherein the sealing bushing (3) has a penetrating shaft recess (10) for a shaft, wherein the shaft recess (10) is rotationally symmetrical to the centre axis (8),
- wherein the bearing housing cover (2) has a bearing surface (11) facing the bearing housing (1) and extending radially from the centre axis (8), wherein the bearing surface is opposite a stop surface (12) of the sealing bushing (3),
- the bearing housing cover (2) having a groove (14) in the bearing surface (11) which is radially spaced from the centre axis (8),
**characterised in**
**that** the groove (14) is circumferential and has a separating web (17) which is arranged below the centre axis (8) and which interrupts the groove (14) and in that the separating web prevents an annular flow of the lubricating oil in the groove (14).

2. Bearing housing according to claim 1,
**characterized in**
**that** the groove (14) has at least one radially outwardly directed discharge channel (20) which is arranged below the central axis (8) and through which the lubricating oil collected in the groove (14) can drain off.

3. Bearing housing according to claim 1 or 2,
**characterized in**
**that** the bearing housing cover (2) has at least one drainage recess (21) arranged below the central axis (8) and resting against an outer side wall (15) of the groove (14).

4. Bearing housing according to one of claims 1 to 3,
**characterized in**
**that** an intersection angle between the outer side wall (15) of the groove (14) and/or an inner side wall (16) of the groove (14) and the center axis (8) is different from zero.

5. Bearing housing according to any one of claims 1 to 4,
**characterized in**
**that** a sealing contour is arranged on the bearing surface (11) and a counter sealing contour is arranged on the stop surface (12) wherein both the bearing surface (11) and the stop surface (12), are rotationally symmetrical and spaced apart from the central axis (8).

6. Bearing housing according to claim 5,
**characterized in**
**that** the sealing contour is a recess (18) and the counter-sealing contour is a spring (19) formed in particular complementarily thereto.

7. Exhaust gas turbocharger with a bearing housing (1) according to one of the preceding claims.

## Revendications

1. Logement de palier (1) avec un couvercle de logement de palier (2) pour un turbocompresseur à gaz d'échappement,
- dans lequel le couvercle de logement de palier (2) est disposé sur le logement de palier (1),
- dans lequel le couvercle de logement de palier (2) présente un évidement d'étanchéité pénétrant à symétrie de révolution (7) avec un axe central (8),
- dans lequel une douille d'étanchéité (3) est disposée dans l'évidement d'étanchéité (7) au moins par zones,
- dans lequel la douille d'étanchéité (3) présente un évidement d'arbre pénétrant (10) pour un arbre, l'évidement d'arbre (10) étant symétrique en rotation par rapport à l'axe central (8),
- dans lequel le couvercle de logement de palier (2) a une surface d'appui (11) faisant face au logement de palier (1) et s'étendant radialement depuis l'axe central (8), dans lequel la surface d'appui est opposée à une surface de butée (12) de la douille d'étanchéité (3),
- le couvercle de logement de palier (2) ayant une rainure (14) dans la surface de palier (11) qui est radialement espacée de l'axe central (8),
**caractérisé en ce que**
la rainure (14) est périphérique et présente une nervure de séparation (17) disposée sous l'axe central (8), qui interrompt la rainure (14), et que la nervure de séparation empêche un écoulement annulaire de l'huile de lubrification dans la rainure (14).

2. Logement de palier selon la revendication 1,
**caractérisé en ce que**
la rainure (14) présente au moins un canal d'évacuation (20) dirigé radialement vers l'extérieur, qui est disposé au-dessous de l'axe central (8) et par lequel l'huile de lubrification recueillie dans la rainure (14) peut s'écouler.

3. Logement de palier selon la revendication 1 ou 2,
**caractérisé en ce que**
le couvercle (2) du logement de palier présente au moins un évidement d'évacuation (21) disposé sous l'axe central (8) et reposant sur une paroi latérale extérieure (15) de la rainure (14).

4. Logement de palier selon l'une des revendications 1 à 3,
**caractérisé en ce**
**qu'**un angle d'intersection entre la paroi latérale extérieure (15) de la rainure (14) et/ou une paroi latérale intérieure (16) de la rainure (14) et l'axe central (8) est différent de zéro.

5. Logement de palier selon l'une quelconque des revendications 1 à 4,
**caractérisé en ce**
**qu'**un contour d'étanchéité est disposé sur la surface d'appui (11) et un contour d'étanchéité opposé est disposé sur la surface de butée (12), la surface d'appui (11) et la surface de butée (12) étant toutes deux symétriques en rotation et espacées de l'axe central (8).

6. Logement de palier selon la revendication 5,
**caractérisé en ce que**
le contour d'étanchéité est un évidement (18) et le contour de contre-étanchéité est un ressort (19) formé en particulier de manière complémentaire à celui-ci.

7. Turbocompresseur de gaz d'échappement avec un logement de palier (1) selon l'une des revendications précédentes.
